Europäisches Patentamt

European Patent Office

Office européen des brevets

(11) Veröffentlichungsnummer: **0 518 206 A1**

# EUROPÄISCHE PATENTANMELDUNG

(21) Anmeldenummer: **92109411.6**

(22) Anmeldetag: **03.06.92**

(51) Int. Cl.5: **C04B** 18/10, B09B 3/00, A62D 3/00, C04B 28/04

(30) Priorität: **12.06.91 DE 4119390**

(43) Veröffentlichungstag der Anmeldung: **16.12.92 Patentblatt 92/51**

(84) Benannte Vertragsstaaten:
**AT BE CH DE DK ES FR GB GR IT LI LU NL PT SE**

(71) Anmelder: **Johne, Rudolf**
**Mayerbachstrasse 2**
**W-8200 Rosenheim(DE)**

(72) Erfinder: **Johne, Rudolf**
**Mayerbachstrasse 2**
**W-8200 Rosenheim(DE)**

(74) Vertreter: **Kurig, Thomas**
**Westermayer Strasse 12**
**W-8200 Rosenheim(DE)**

(54) Verfahren zum Aufbereiten und ggf. Verfestigen von Filterstäuben und/oder Reaktionsprodukten.

(57) Beschrieben wird ein Verfahren zum Aufbereiten und ggf. Verfestigen von Filterstäuben und/oder Reaktionsprodukten, das durch folgende Schritte gekennzeichnet ist:

a) Vermischen von Filterstäuben und/oder Reaktionsprodukten mit Calciumoxid und/oder Magnesiumoxid und ggf. weiteren Zuschlagsstoffen unter Wasserzusatz bei einer erhöhten Temperatur

b) Trocknen des unter a) erhaltenen Gemisches bei einer Temperatur von über 100°C unter gleichzeitigem Zerkleinern bzw. Entklumpen des trocknenden Produkts,

c) Erhitzen des unter b) erhaltenen zerkleinerten Trockenprodukts unter im wesentlichen nichtoxidierenden Bedingungen bei einer Temperatur von über 230°C,

d) Abkühlen des unter c) erhaltenen Produkts auf eine Temperatur von unter 70°C unter im wesentlichen nichtoxidierenden Bedingungen.

EP 0 518 206 A1

Die vorliegende Erfindung betrifft ein Verfahren zum Aufbereiten von Filterstäuben und/oder Reaktionsprodukten, vorzugsweise aus der erweiterten Rauchgasreinigung von Abfall- und Klärschlammverbrennungsanlagen. Insbesondere betrifft die Erfindung ein Verfahren zum Verfestigen dieser Rückstände mit dem Ziel einer umweltverträglichen Deponierung oder vorzugsweise Verwertung.

In den Industrieländern müssen viele Millionen Tonnen Hausmüll, Gewerbeabfälle sowie Sperrmüll entsorgt werden. Trotz großer Anstrengung auf dem Gebiet der Abfallvermeidung und Abfallwiedergewinnung bzw. Verwertung werden noch immer Millionen Tonnen derartiger Abfälle in Müllverbrennungsanlagen verbrannt. Die bei der Verbrennung entstehenden Rauchgase verunreinigen wiederum die Luft.

Die Verbrennung der Abfälle wird auch in Zukunft ein unverzichtbarer Bestandteil eines funktionsfähigen Abfallwirtschaftskonzepts bleiben, auch wenn es gelingen sollte, einen noch größeren Teil des zur Zeit anfallenden Abfalls zu vermeiden oder zu verwerten.

Bei der Abfallverbrennung sowie dem nachgeschalteten Rauchgas-Reinigungsverfahren fallen Rückstände an, die nach dem Bundesimmissionsgesetz umweltverträglich zu entsorgen d.h. zu deponieren sind. Die Rückstände müssen daher einer spezifischen Aufbereitung bzw. Verwertung zugeführt werden. Zu diesem Zweck ist eine weitgehende Inertisierung, d.h. Zerstörung bzw. Immobilisierung der in den Rückständen enthaltenen Schadstoffe notwendig.

Filterstäube und Reststoffe aus der weitergehenden Rauchgasreinigung enthalten eine große Menge an hochtoxischen organischen Stoffen, z.B. Schwermetalle und Mischsalze, die in Wasser löslich sind und daher eine Gefahr für das Grundwasser darstellen. Eine Entlagerung dieser Rückstände in offenen Deponien muß ausgeschlossen sein, da die Schadstoffe hygroskopisch sind und aufgrund ihrer leichten Löslichkeit leicht ausgewaschen werden, z.B. durch Regen.

Die bisherige Entsorgungspraxis ist ungenügend. So gibt es Verfahren, die Filterstäube bei hohen Temperaturen von 1200°C bis 1500°C zu einem glasartigen Granulat einschmelzen, wobei jedoch bei diesen hohen Temperaturen verdampfende Schadstoffe entweichen und durch umfangreiche Filter aufgefangen werden müssen. Bei Rückführung dieser erneut angereicherten Rückstände werden die Stäube neu mit Schadstoffen belastet. Ferner ist dieses Verfahren anlagentechnisch aufwendig und hat einen hohen Energieverbrauch.

Es ist ferner bekannt, Flug- und Filterstäube aus Müllverbrennungsanlagen mit Zement zu verdichten. Diese Verfahren haben sich jedoch nicht durchgesetzt, da die im verfestigten Produkt eingebundenen Mischsalze weiter reagieren und nach kurzer Zeit wieder in die Umwelt gelangen.

Aus der US 19,42,770 ist bereits ein Verfahren bekannt, welches das Vermengen von zu verfestigender Flugasche mit Branntkalk offenbart. Dabei kommt es zwischen den Bestandteilen der Flugasche und dem Branntkalk zu einer chemischen Reaktion. Der Abfallstoff ist jedoch auf Flugasche aus der Verbrennung von bituminöser Kohle beschränkt. Es ist kein Hinweis auf die Entsorgung von Schwermetallen gegeben. Ferner weist das vorbekannte Verfahren einen vorgeschalteten Prozeß auf, in dem ungelöschte Bestandteile der Flugasche durch Altern in feuchter Atmosphäre bei Raumtemperatur neutralisiert werden sollen. Darüber hinaus soll ein Benetzen der Flugasche durch Tempern des Gemisches aus Flugasche und Branntkalk bei höherer Temperatur in feuchter Atmosphäre erreicht werden. Hierfür ist ein Zeitraum von 12 Stunden oder länger erforderlich.

Aus der EP 222 457 B1 ist bereits ein Verfahren zur Herstellung von Bauelementen aus Flugasche bekannt, welche Kalziumhydroxid oder einen in Kalziumhydroxid umwandelbaren Stoff enthalten. Darüber hinaus können auch Gips, Kies, Metalloxide und Schlämme enthalten sein. Das aufbereitete und granulierte Material wird mittels einer Presse in die gewünschte Form gebracht, worauf man den Formkörper bei weniger als 100°C in ca. 8 Stunden aushärten läßt. In dieser Druckschrift wird jedoch eine auslaugbeständige Verfestigung von Schwermetallen und anderen Schadstoffen nicht angesprochen und auch nicht bezweckt. Eine spezielle Hochtemperaturbehandlung ist nicht vorgesehen.

Aus der DE-OS 35 25 111 ist bereits die Verfestigung von Abfallstoffen, z. B. Aschen- oder Filterstäuben, mittels eines hydraulischen Bindemittels, z. B. Portland-Zement, bekannt. Eine dauerhafte Immobilisierung der Schadstoffe wird jedoch durch eine solche Einbindung von Abfallstoffen in Zement nicht erreicht.

Aus der DE-OS 32 39 768 ist bereits ein Verfahren zur Aufbereitung von Kalziumsulfatabfällen bekannt, wie sie auch bei der Rauchgasentschwefelung entstehen. Durch Zusatz geeigneter Mengen Kalziumoxid soll die Fließ- und Förderfähigkeit des Abfallstoffs so weit verbessert werden, daß sich hieraus Stoffe für die Bauindustrie gewinnen lassen.

Schließlich ist aus der DD 149 136 bereits ein Verfahren zur Ab- und Endlagerung von Abfallstoffen bekannt, das zu im wesentlichen verfestigten Produkten führt. Es werden zwei Alternativen vorgeschlagen, wonach die Abfallstoffe einerseits mit einem wasserabweisenden thermoplastischen Bindemittel oder mit einem durch chemische Umsetzung erhärtenden Bindemittel zur Reaktion gebracht werden. Dieses Bindemittel kann z. B. Portland-Zement sein. Die verfestigten Formkörper können als Baumaterial für verschiedene Zwecke eingesetzt werden. Eine Mineralneubildung findet im vorbekannten Verfahren jedoch nicht statt.

Die bekannten Verfahren haben den Nachteil, daß das Problem der Wasserlöslichkeit der Substanzen nicht gelöst wird. Die bei der Hochtemperaturschmelzung erhaltenen Produkte erzeugen neue toxisch belastete Rohstoffe und auch die mit Zement verdichteten Produkte weisen noch immer eine hohe Eluierbarkeit der Schadstoffe auf. Eine offene Entlagerung ist daher ausgeschlossen.

Ein weiteres Verfahren, Filterstäube und andere Reaktionsprodukte aus der Rauchgasreinigung, z.B. Reaktionssalze, zu entsorgen, besteht darin, die Stoffe untertage in Bergwerke, Salzstöcke oder ähnlich gesicherte Deponien zu verbringen. Das Unterbringungsvolumen dieser Deponien ist jedoch begrenzt und die Lagerkosten sind derart hoch, daß die Betreiber von Müllverbrennungsanlagen vor erhebliche finanzielle Probleme gestellt sind.

Die Hauptbestandteile von Filterstäuben sind im wesentlichen Chloride, Silikate, Calciumverbindungen sowie giftige Schwermetalle. Ein typisches Beispiel für die Zusammensetzung von Filterstäuben aus Gewebe- bzw. Elektrofiltern von Müllverbrennungsanlagen zeigt die Tabelle 1.

Die Tabelle 2 zeigt die Zusammensetzung von Sprühtrocknersalzen, die als Reaktionsprodukt in der erweiterten Rauchgasreinigung anfallen.

## Tabelle 1

### Zus.setzung v. Filterstäuben aus Gewebe- bzw. Elektrofilter

| Parameter | MVA Würzburg Rückstand Gewebefilter | MVA Geiselbullach Rückstand Gewebefilter | MVA München-Nord Block 3 Rückstand Elektrofilter |
|---|---|---|---|
| Wassergehalt % | 2 | 35,9 | 0,5 |
| Hauptbestandteile * | | | |
| – $CaCl_2$ | 18 | 22 | 23 |
| – $CaSO_4$ | 6 | – | 7 |
| – $Ca(OH)_2$ | 46 | 53 | 55 |
| – $CaCO_3$ | 14 | 17 | 11 |
| – unlöslicher Flugstaub | 16 | 3 | 4 |
| – Auslaugbares | 24,5 | 27 | 28 |
| Schwermetalle * (mg/kg) | | | |
| – Cadmium | 142 | 128 | 265 |
| – Nickel | 23 | 7 | 20 |
| – Quecksilber | 2 | 6 | – |
| – Thalium | < 20 | – | < 20 |
| – Blei | 2300 | 1897 | 2500 |
| – Kupfer | 298 | 245 | 215 |
| – Chrom | 56 | – | 100 |
| – Zink | 6290 | 6999 | 5800 |

\* Die Werte beziehen sich auf Trockensubstanz.

Tabelle 2

| Sprühtrocknersalze aus der erweiterten Rauchgasreinigung | | | |
|---|---|---|---|
| | MVA Biebesheim | MVA St. Gallen | MVA Landshut |
| Chlorid Cl$^-$ | 236 g/kg | 145 g/kg | 494 g/kg |
| Sulfat SO$_4$$^{2-}$ | 209 g/kg | 89 g/kg | 136 g/kg |
| Zink Zn | 7,6 g/kg | 31,5 g/kg | 34,3 g/kg |
| Blei Pb | 1,9 g/kg | 10,8 g/kg | 8,0 g/kg |

Bei der Analyse der Ausgangsstoffe hat man sich auf 4 wichtige Parameter beschränkt. Als Indikator für gut lösliche Stoffe wurde Chlorid (Cl$^-$) und Sulfat (So$_4$$^{2-}$) gewählt.

Als Indikator für Schwermetalle wurden als kritische Parameter Zink (Zn) und Blei (Pb) ausgewählt.

Die Stäube sind insbesondere mit Blei, Kadmium, Zink und Kupfer angereichert, welche hauptsächlich für die Toxizität verantwortlich sind. Der Gehalt an löslichen Chloriden und Sulfaten ist ebenfalls beachtlich hoch und kann 50 % überschreiten.

Die Aufgabe der vorliegenden Erfindung besteht darin, ein Verfahren zum Aufbereiten und ggf. Verfestigen von Filterstäuben und/oder Reaktionsprodukten, vorzugsweise aus der erweiterten Rauchgasreinigung in Abfallverbrennungsanlagen, zur Verfügung zu stellen, bei dem ein auslaugbeständiges Endprodukt, in dem die Schadstoffe immobilisiert sind, entsteht, das problemlos entsorgt und ohne Gefährdung der Umwelt über längere Zeit in offenen Deponien gelagert werden kann.

Die Aufgabe wird gelöst durch ein Verfahren zum Aufbereiten und Verfestigen von Filterstäuben und/oder Reaktionsprodukten gemäß Anspruch 1 und 2.

Bei der Anwendung des erfindungsgemäßen Verfahrens kommt es zu einer Reaktion von Filterstaub- und/oder Reaktionsprodukten, z.B. Sprühtrocknersalzen mit dem erfindungsgemäßen Calciumoxid bzw. Magnesiumoxid, was zu einer Mineralneubildung aus den leicht löslichen Mischsalzen und Schwermetalloxiden führt. Das gebildete Speichermaterial ist nur schwer wasserlöslich und kann in einer bevorzugten Ausführungsform mit einem hydraulischen Bindemittel zusätzlich verfestigt werden. Die nichtoxidierenden Bedingungen sind einerseits wichtig, um eine Reaktion von Luft bzw. Sauerstoff mit dem Produkt zu verhindern, andererseits um Staubexplosionen und evt. Explosionen von Ausgasungen zu unterbinden.

Die Filterstäube und/oder Reaktionsprodukte stammen bevorzugt aus der erweiterten Rauchgasreinigung und liegen in Form der oben genannten Sprühtrocknersalze bzw. Chloride, Silikate, Calciumverbindungen sowie giftigen Schwermetalle vor.

Das Vermischen nach Schritt a) findet bevorzugt während einer Zeitdauer von mindestens 5 min., besonders bevorzugt 10 - 15 min. und bei einer Temperatur von 40° bis 130°C statt, so daß ein weitgehend homogenes Gemisch entsteht.

Das Trocknen nach Schritt b) findet bevorzugt bei einer Temperatur über 100°C statt, so daß eine Mindesttemperatur angegeben ist, deren Unterschreiten nachteilig ist, und ist mit dem Erhitzen nach Schritt c) kombiniert.

Das Erhitzen nach Schritt c) findet bevorzugt in einem Temperaturbereich von 230°C bis 380°C statt. In diesem Temperaturbereich werden besonders gute Ergebnisse erzielt. Ferner führt das Erhitzen bevorzugt zu einem i. w. hydratwasserfreien Produkt.

Das Abkühlen nach Schritt d) findet bevorzugt mit einer Abkühlgeschwindigkeit von mindestens 10° C/min statt. Bei dieser starken Abkühlgeschwindigkeit ist ein gewisser Abbau von Dioxin beobachtet worden.

In einem weiteren Schritt e) wird bevorzugt das in Schritt d) erhaltene Produkt durch Vermischen mit einem hydraulischen Bindemittel verfestigt. Dies führt zu einer weiteren Verfestigung des erhaltenen Verfahrens-Endproduktes.

Das Vermischen mit dem hydraulischen Bindemittel erfolgt bevorzugt unter Zusatz einer geeigneten Silikonverbindung, die beispielsweise Kaliummethylsilikonat aufweist. Bei Vermengung dieser Silikonverbindung mit dem erfindungsgemäßen Verfahrensprodukt nach Schritt d) werden überraschenderweise die in der Schlacke enthaltenen löslichen Schadstoffe so an die Schlacke gebunden bzw. in der Schlacke eingeschlossen, daß sie nicht mehr ausgewaschen werden können. Damit ist eine über Jahre sichere Freilanddeponie möglich, ohne daß kostenaufwendige Maßnahmen zum Schutz des Grundwassers getroffen werden müßten. Ferner ist die Möglichkeit gegeben, die Schlacke durch Zusatz von Zement in eine Masse umzuwandeln, die im Straßenbau Verwendung finden kann. Das Kaliummethylsilikonat wird in wässriger Lösung bevorzugt mit einem Festgehalt von 35 - 50 Gew.-% in einem Anteil von 1 - 6 Gew.-‰ mit dem erhaltenen Produkt nach Schritt d) gemischt.

Bei Verwendung von Branntkalk (Calciumoxid) ist für die Ausbildung der schwerlöslichen Salze ein Gewichtsanteil des Branntkalks von 10 - 60 Gew.-%, bevorzugt 10 - 30 Gew.-%, vorgesehen, bezogen auf das trockene Gesamtgemisch aus Filterstaub und weiteren Reaktionsprodukten (aus der Rauchgasreinigung), ggf. zusammen mit weiteren Zuschlagsstoffen. Im allgemeinen enthalten Filterstäube und andere Reaktionsprodukte aus der Rauchgasreinigung bereits größere Mengen an Kalk, so daß die zugegebene Menge an Calciumoxid in Form von ungelöschtem Kalk (Branntkalk) reduziert werden kann. Es muß jedoch mindestens 10 Gew.% Branntkalk (ungelöschter Kalk) zugesetzt werden, um eine Mineralneubildung zu bewirken.

Ferner wurde ermittelt, daß als Zuschlagsstoff in Schritt a) Rotschlamm und/oder REA-Gips und/oder Galvanikschlamm zu dem Gemisch nach Schritt a) in einem Gewichtsverhältnis von 10 : 1 bis 1 : 10, bevorzugt 3 : 10, bezogen auf die Mischung von Filterstäuben und/oder Reaktionsprodukten mit Branntkalk bevorzugt zugesetzt wird. Im Rotschlamm befinden sich sowohl $Al_2O_3$ als auch $Fe_2O_3$. Diese beiden Komponenten im Rotschlamm fallen als Abfallprodukt bei der Aluminiumherstellung in Form von Bauxidaufschlußrückständen in großen Mengen an. Die Entsorgung der Rotschlämme geschieht bisher in der Form, daß sie in Schlammbecken oder Deponien abgelagert werden. Der Prozeß der Mineralneubildung verläuft besonders vorteilhaft, wenn der Mischung aus Filterstäuben und/ oder Reaktionsprodukten mit Kalk eine größere Menge $Al_2O_3$ als Reaktant zur Verfügung steht. Aber auch $Fe_2O_3$ ist als Reaktionspartner geeignet.

Eine typische Zusammensetzung von Rotschlämmen zeigt die Tabelle 3.

Tabelle 3

|  | Gew.% |
|---|---|
| $SiO_2$ | 9 - 13 |
| $TiO_2$ | 8 - 13 |
| $Fe_2O_3$ | 30 - 45 |
| $Al_2O_3$ | 20 - 30 |
| $Na_2O$ | 4 - 8 |
| CaO | 0,1 - 2 |

Rotschlämme lassen sich durch Beimischung von Branntkalk zwar verfestigen, jedoch wird ihr Auslaugverhalten nicht genügend stabilisiert. Die einzelnen Bestandteile lassen sich dennoch herauslösen. Die Rotschlammentsorgung stellt damit ebenfalls ein wichtiges Problem dar. Ein besonderer Vorteil der vorliegenden Erfindung ist deshalb darin zu sehen, daß auch der Rotschlamm nutzbringend bei der Lösung des vorliegenden Problems eingesetzt und damit entsorgt werden kann. Rotschlamm steht in ausreichenden Mengen zur Verfügung und ist günstig im Handel erhältlich. Durch Einsatz von Rotschlamm kann insbesondere der Anteil an zuzusetzendem Siliziumoxid, beispielsweise Kieselsäure bzw. Silikat, herabgesetzt werden.

Die alternative Verwendung von REA-Gips ist ebenfalls vorteilhaft. Durch Zusatz des REA-Gipses besteht die Möglichkeit, aus den leicht wasserlöslichen Filterrückständen der Abfallverbrennungsanlagen ein ebenfalls nur schwer wasserlösliches neues Speichermineral zu erzeugen. Das Verfahren ähnelt dem Einsatz der Rotschlämme. Der REA-Gips fällt in den Industrieländern bei der Rauchgasreinigung in Braunkohle- und Steinkohlekraftwerken in einer Menge von mehreren Millionen Tonnen jährlich an. Ein Teil davon wird in der Baustoffindustrie wiederverwertet, jedoch müssen bestimmte Mengen, die stark kontaminiert sind und deren Schadstoffanteil über den zugelassenen Werten der TVA liegen, auf Sondermülldeponien endgelagert werden. Diese REA-Gipse sind mit Chloriden so hoch angereichert, daß ein Einsatz in der Bauindustrie nicht mehr zulässig ist. Die Zugabe von REA-Gips zu hoch mit Chloriden belasteten Abfallverbrennungsfilterstäuben, die mit ungelöschtem Branntkalk behandelt, d.h. vermischt wurden, in Anwesenheit einer genügenden Menge Kieselsäure $SiO_2$ unter Zugabe von Wasser (Deponiesickerwasser, Kondensat aus dem Trockungsprozeß) bewirkt eine Speichermineralneubildung. Chloride und Sulfate werden schwer löslich eingebunden und können mit dem hydraulischen Bindemittel auslaugbeständig verfestigt werden.

Bei Reaktion mit dem Rotschlamm und/oder dem REA-Gips bilden sich aus den in den Filterstäuben und weiteren Reaktionsprodukten enthaltenen leicht löslichen Salzen chloridhaltige Kalzium- und Aluminathydrate, die schwer löslich sind. Es kommt dabei zur Mineralneubildung nach dem Muster des als Friedelsches Salz bekannten Speicherminerals.

Das Gewichtsverhältnis von Filterstaub und/oder Reaktionsprodukten und Branntkalk zu Rotschlamm und/oder REA-Gips kann im Bereich von 10 : 1 bis 1 : 10 variieren, wobei ein Verhältnis von 10 : 3 bevorzugt ist. Werden die Grenzwerte wesentlich über- bzw. unterschritten, kommt es zu keiner ausreichenden Bildung der schwer löslichen Salze und die Auslaugbeständigkeit der Produkte ist ungenügend. Als besonders günstig hat sich ein Verhältnis von 1 Gew.Teil Filterstaub und/oder Reaktionsprodukten zu 1 Gew.Teil Rotschlamm und/oder REA-Gips sowie 1 Gew.Teil Branntkalk erwiesen.

Als vorteilhaft erwiesen hat sich auch der Zusatz von Kieselsäure, d.h. Siliziumdioxid ($SiO_2$) als weiterer Zuschlagsstoff für die Salzneubildung, sofern in den Filterstäuben bzw. im Rotschlamm nicht schon bereits Siliziumdioxid in ausreichender Menge enthalten ist. Siliziumdioxid, vorzugsweise in aktiver Form, wird den anderen Komponenten Filterstaub und/oder Reaktionsprodukten, Rotschlamm und/oder REA-Gips und Branntkalk mit einem Anteil von 0,1 - 3,0 Gew.%, bevorzugt 0,5 - 3,0 Gew.%, bezogen auf das trockene Gesamtgemisch, beigemischt.

Die Reihenfolge des Vermischens der Komponenten nach Schritt a) ist veränderbar und wird sich danach richten, wie sich die technische Lösung im speziellen Fall am besten verwirklichen läßt. So kann man beispielsweise in einer Ausführungsform zunächst Filterstaub und/oder Reaktionsprodukte, Rotschlamm und/oder REA-Gips, Branntkalk und ggf. weitere Zuschlagsstoffe innig miteinander vermischen. Anschließend schlämmt man mit soviel Wasser auf, daß eine homogene pastöse Masse gebildet wird. Hierbei kommt es je nach dem Anteil von Branntkalk zu einer exothermen Hydratation, welche zu einem Temperaturanstieg auf ca. 50 - 120°C führt. Dieser Temperaturbereich ist für das Einsetzen der Salzneubildungsreaktion erforderlich. Ist daher die exotherme Reaktion stark genug, kann der Temperaturbereich ohne weitere Wärmezufuhr eingehalten werden. Es besteht die zusätzliche Möglichkeit, anstelle des zuzugebenden Brauch- oder Trinkwassers, das im folgenden Trocknungsschritt b) zurückgewonnene Kondensatwasser oder evtl. Sickerwasser aus Deponien zu verwenden. Das so erhaltene pastöse Mischprodukt wird anschließend in einen Trockner/Reaktor eingeführt. Eine kontinuierliche Betriebsweise läßt sich verwirklichen, wenn zwei Chargenmischer wechselweise betrieben werden.

Die Trocknung des Mischprodukts nach Schritt b) findet in einem Temperaturbereich von 100°C - 280°C, bevorzugt 120°C - 250°C statt, wobei zunächst der Wasseranteil ausdampft. Die austretenden Brüden werden kondensiert und das Kondensatwasser kann beim Mischen der Komponenten nach Schritt a) wiederverwendet werden. Es besteht auch die Möglichkeit, das Kondensatwasser für eine abschließenden Verfestigung des aufbereiteten Produktes mit einem hydraulischen Bindemittel (Schritt e) ) einzusetzen.

Das zu trocknende Produkt erstarrt zu einer sehr festen glasartigen Masse, so daß es bevorzugt ist, während des Trocknens stetig zu zerkleinern bzw. zu entklumpen, um ein fein granuliertes, rieselfähiges Produkt zu erhalten.

Alternativ zu der oben genannten Verfahrensweise kann das Trocknen und Zerkleinern bei dem anschließenden Durchgang des Materials durch die Heizeinrichtung erfolgen.

An den Trockungs- und Zerkleinerungsschritt b) schließt sich eine Wärmebehandlung in Schritt c) in einem Temperaturbereich über 230°C, bevorzugt 250°C bis 350°C, des zerkleinerten Trockenprodukts an. Dabei kommt es zur endgültigen Umwandlung der mineralischen Bestandteile in schwerlösliche Salze, wobei auch Kristallwasser austreten kann. Die enthaltenen anorganischen Schadstoffe, wie Schwermetalle und andere Salze, werden weitgehend immobilisiert.

Die Trocknung nach Schritt b) wird bevorzugt unter nichtoxidierenden Bedingungen, so daß eine Oxidation während des Trocknens ausgeschlossen ist.

Um eine Immobilisierung der Schadstoffe zu gewährleisten, sollte die Dauer der Hitzebehandlung in Schritt c) mindestens 10 min., vorzugsweise 15 bis 90 min. betragen. Anschließend muß das Reaktionsprodukt möglichst rasch in Schritt d) auf eine Temperatur unter 80°C, bevorzugt unter 70°C, abgekühlt werden. Die Abkühlgeschwindigkeit beträgt bevorzugt mindestens 10°C/min. besonders bevorzugt mindestens 30°C/min., was sich mit einer wassergekühlten Kühlschnecke leicht erreichen läßt.

Das Erhitzen und Abkühlen findet unter nichtoxidierenden Bedingungen statt, da hierdurch das Auftreten von Staubexplosionen verhindert werden kann und somit die Betriebssicherheit der Aufbereitungsanlage erhöht ist. Für die Einhaltung der nichtoxidierenden Bedingungen genügt es, im allgemeinen unter Luftausschluß zu arbeiten und weiteren Luftzutritt zu verhindern. Evtl. im System noch vorhandener Sauerstoff wird verbraucht und geringe Mengen wirken sich nicht störend aus. Es kann jedoch auch unter vermindertem Druck oder unter Inertgas, z.B. Stickstoff, gearbeitet werden.

Es ist bevorzugt, daß man kontinuierlich das Trocknen und Zerkleinern in Schritt b) sowie das Erhitzen in Schritt c) in einer Heizeinrichtung mit zwei unterschiedlichen Wärmezonen durchführt, wobei das Material transportiert, zerkleinert und der gebildete Wasserdampf abgeführt wird. Das Verfahren wird vorteilhaft in einem kombinierten Trocknungs- und Reaktionsofen mit mindestens zwei unterschiedlichen Wärmezonen durchgeführt. Ein solcher Thermoreaktor besteht aus einem heizbaren zylindrischen Gehäuse und einer darin rotierenden Welle, auf die heizbare scheibenförmige Segmente mit unterbrochenen Mischbarren am äußeren Durchmesser aufgesetzt sind. Der Transport des Materials zwischen den Wärmezonen erfolgt durch die schrägstehenden Segmente, wobei die in der Gehäusewand fest eingebauten Schikanen für eine gute Mischung, Zerkleinerung und ständige Feststoffauflockerung sorgen. Die Schaufelanordnung gewährleistet auch einen guten Wärmeübergang von den beheizten Flächen zum Material und minimiert durch weitgehende Selbstreinigung den Belag auf den Wärmeübertragungsflächen.

In dem auf diese Weise erhaltenen Produkt sind die in dem ursprünglichen Filterstaub und den Reaktionsprodukten aus der erweiterten Rauchgasreinigung vorhandenen organischen und anorganischen Schadstoffe teilweise zerstört bzw. durch Bildung schwer löslicher Salze immobilisiert. Das granulatförmige Produkt wird jedoch vorteilhaft in Schritt e) weiter verfestigt, um eine sichere oberirdische Deponierung zu gewährleisten oder ggf. eine weitere Wiederverwendung zu ermöglichen.

Hierzu werden die in Schritten a) bis d) aufbereiteten Rückstände mit hydraulischen Bindemitteln, z.B. Portland-Zement und ggf. weiteren Additiven und Wasser vermischt. Das Gewichtsverhältnis von aufbereitetem Produkt zu hydraulischem Bindemittel ist dabei bevorzugt innerhalb eines Bereichs von 1 : 6 bis 6 : 1 frei wählbar. Als günstig hat sich ein Anteil von Bindemittel zu aufbereitetem Produkt von 15 - 40 Gew.%, bevorzugt 20 - 30 Gew.% und besonders bevorzugt 25 Gew.% erwiesen. Dies entspricht einem Verhältnis von 4 Teilen aufbereitetem Produkt zu einem Teil hydraulischen Bindemittel. Der Anteil an Bindemittel sollte jedoch 10 Gew.% nicht unterschreiten, um eine ausreichende Verfestigung sicherzustellen. Der Zusatz von geeigneten Silikonverbindungen, z.B. Kaliummetylsilikonat verleiht dem festen Produkt zusätzlich wasserabweisende Eigenschaften, was die Auslaugbeständigkeit deutlich erhöht. Für das zur Verfestigung notwendige Wasser kann wiederum Kondensatwasser aus dem Trocknungsschritt b) verwendet werden. Das in Deponiekassetten vergossene oder in Blockform verfestigte Produkt kann als solches auf einer geeigneten Deponie oberirdisch gelagert werden, ohne daß es zu einer Belastung der Umwelt durch austretende Schadstoffe infolge einer Auswaschung kommt. Insbesondere setzt man in Schritt e) Kaliummethylsilikonat in einem Anteil von etwa 0,5 - 5 kg, bevorzugt 1,5 - 2,0 kg pro $m^3$ aufbereiteten Produkts zu.

Das verfestigte Produkt kann als Zuschlagsmaterial anstelle von Kies und Sand oder als Bergbaumörtel verwendet werden. Bevorzugt verwendet man ein Hydrophobisierungsmittel als Silikonverbindung, um das Eindringen von Wasser in das aufbereitete Produkt zu verhindern.

Als Zuschlagsstoff eignet sich ferner in Schritt a) Wasserglas (Natriumsilikat) in Lösung in einem Anteil von 1 - 20 Gew.-%, bevorzugt 1 - 10 Gew.-%, bezogen auf die Mischung von Filterstäuben und/oder Reaktionsprodukten mit Branntkalk bzw. Rotschlamm und/oder REA-Gips, bzw. zu dem Gemisch nach Schritt a).

Ferner eignet sich als Zuschlagsstoff in Schritt a) Karbid (Kalziumkarbid), bevorzugt als Granulat, in einem Anteil von 1 - 5 Gew.-%, bevorzugt 2 - 3 Gew.-% zu dem Gemisch nach Schritt a).

Die nach dem erfindungsgemäßen Verfahren erhältlichen Produkte weisen im Hinblick auf ihr Auslaugverhalten, Permeabilität sowie Festigkeit hervorragende Werte auf, was nicht nur ihre umweltverträgliche oberirdische Deponierung erlaubt, sondern auch zu ihrer Verwendung als Werk- und Baustoff beiträgt.

Weitere Vorteile, Merkmale und Anwendungsmöglichkeiten der vorliegenden Erfindung ergeben sich aus der nachfolgenden Beschreibung eines Ausführungsbeispiels.

Es werden Filterstäube und Rückstände aus der erweiterten Rauchgasreinigung einer Müllverbrennungsanlage nach dem beschriebenen Verfahren nach Schritten 1 - 7 verarbeitet.

1. Es werden Substanzen mit folgender Zusammensetzung verwendet.

a) Filterstaub aus dem Elektrofilter:

| Chlorid | $Cl^-$ | 56 | g/kg |
|---------|--------|-----|------|
| Sulfat | $SO_4^{2-}$ | 70 | g/kg |
| Zink | Zn | 31 | g/kg |
| Blei | Pb | 7,9 | g/kg |

b) Sprühtrocknerrückstände aus der erweiterten Rauchgasreinigung:

| Chlorid | $Cl^-$ | 494 | g/kg |
|---------|--------|-----|------|
| Sulfat | $SO_4^{2-}$ | 136 | g/kg |
| Zink | Zn | 34,3 | g/kg |
| Blei | Pb | 8,0 | g/kg |

c) Rotschlamm:

| SiO$_2$ | 100 | g/kg |
|---|---|---|
| TiO$_2$ | 61 | g/kg |
| Fe$_2$O$_3$ | 400 | g/kg |
| Al$_2$O$_3$ | 230 | g/kg |
| Na$_2$O | 70 | g/kg |
| CaO | 6 | g/kg |

d)

| REA-Gips | 500 | g |
|---|---|---|

2. Die Komponenten werden in den folgenden Gewichtsverhältnissen vorgemischt und zur Reaktion gebracht:

In einem ersten Ausführungsbeispiel werden Filterstaub, Sprühtrocknerrückstand, Rotschlamm, Branntkalk, Karbid, Wasserglas und Kieselsäure in folgenden Verhältnissen vermischt:

| 1.000 g | Filterstaub |
|---|---|
| 400 g | Sprühtrocknerrückstand |
| 600 g | Rotschlamm |
| 400 g | Branntkalk |
| 90 g | Karbid |
| 100 g | Wasserglas |
| 5 g | Kieselsäure |

In einem zweiten alternativen Ausführungsbeispiel werden Rotschlamm als Reaktionsprodukt, Branntkalk, Karbid und Wasserglas in folgendem Verhältnis vermischt:

| 2.000 g | Rotschlamm |
|---|---|
| 400 g | Branntkalk |
| 90 g | Karbid |
| 100 g | Wasserglas |

In einem dritten alternativen Ausführungsbeispiel werden Sprühtrocknersalz, Rotschlamm, Branntkalk, Karbid und Wasserglas in folgendem Verhältnis vermischt:

| 1.000 g | Sprühtrocknerrückstand |
|---|---|
| 1.000 g | Rotschlamm |
| 400 g | Branntkalk |
| 90 g | Karbid |
| 100 g | Wasserglas |

Schließlich werden in einem vierten alternativen Ausführungsbeispiel Filterstaub, REA-Gips, Branntkalk, Karbid und Wasserglas in folgendem Verhälnis vermischt:

| 1.000 g | Filterstaub |
|---|---|
| 1.000 g | REA-Gips |
| 400 g | Branntkalk |
| 90 g | Karbid |
| 200 g | Wasserglas |

Wesentliche auslaugbare Inhaltsstoffe dieser Gemische sind:

| Chlorid | Cl$^-$ | 550 | g |
| Sulfat | SO$_4$$^{2-}$ | 206 | g |
| Zink | Zn | 66,2 | g |
| Blei | Pb | 15,9 | g |

Das Gemisch wird in einem Rührwerk/Mischer für 10 bis 15 min. unter Zuführung von Wasser (Deponiesickerwasser oder Kondensatwasser oder Brauchwasser) gerührt, reagiert exotherm und erwärmt sich auf bis zu 120°C. Das Rühren findet statt bevorzugt bis die exotherme Reaktion abgeklungen ist. Das Gemisch wird danach 15 - 30 min. stehengelassen, wobei die einzelnen Stoffe bereits miteinander reagieren.

3. Trocknen des Gemisches während 15 min. im Reaktionsofen mit integrierter Zerkleinerungsvorrichtung unter nichtoxidierenden Bedingungen bei einer Temperatur von 150°C, wobei die in der Anmischphase einsetzende Mineralneubildung weiter abläuft. Nach Beendigung des Vorgangs (60 - 70 min.) ist das Wasser bis auf 4 - 7 % ausgedampft. Man erhält nun ein rieselfähiges, im Volumen um 60 % reduziertes Granulat.

4. Erhitzen des Granulats auf 300°C für 20 min. Dabei wird das Produkt möglichst wenig bewegt. Auch hier herrschen nichtoxidierende Bedingungen vor.

5. Abkühlen des Produkts schockartig mittels einer wassergekühlten Kühlschnecke ohne Luftzufuhr auf unter 80°C. Das nun erhaltene Produkt ist nicht mehr hygroskopisch. Die darin enthaltenen Salze und Schwermetalle Cl$^-$, SO$_4$$^{2-}$, Blei (Pb) und Zink (Zn) sind nur schwer wasserlöslich.

6. Das Granulat wird dergestalt weiterbehandelt, daß man es nach Zusatz von 1,6 Gew.-‰ von Kaliummethylsilikonat mit Kondensatwasser oder Brauchwasser vermischt. Durch Zugabe von 30 Gew.% Portland-Zement erhält man einen Mörtel, der in eine Form gegossen wird und nach ca. 1 Stunde auszuhärten beginnt.

7. Eluattest

Nach einer Aushärtzeit von 28 Tagen wird das verfestigte Endprodukt nach dem Schweizer Eluattest (SET) gemäß TVA, BUS/EDI 1988 eluiert. Dabei wird der Probekörper in eine 10fach größere, vorher entsalzte Wassermenge gehängt und 24 Stunden mit CO$_2$-Gas begast. Nach den 24 Stunden wird das Wasser gewechselt und der Vorgang wiederholt. Man erhält somit zwei Eluatlösungen, aus denen sich ein normierter Wert errechnet.

Der verfahrensgemäß gebildete Versuchskörper enthält folgende lösbare Stoffe:

| Chlorid | Cl$^-$ | 550 | g |
| Sulfat | SO$_4$$^{2-}$ | 206 | g |
| Zink | Zn$^{2+}$ | 66,2 | g |
| Blei | Pb$^{2+}$ | 15,9 | g |

Die normierten Eluatwerte nach SET ergeben:

| Chlorid | mg/l | 2,5643 |
| Sulfat | mg/l | 1,2306 |
| Zink | mg/l | 2,5643 |
| Blei | mg/l | 0,4194 |
| Permeabilität | m/s | 1,18 x 10$^{-12}$ |
| Druckfestigkeit | n/min$^2$ | 8,4 |

Die Grenzwerte des Schweizer Eluattests wurden damit erfüllt.

**Patentansprüche**

1. Verfahren zum Aufbereiten und ggf. Verfestigen von Filterstäuben und/oder Reaktionsprodukten, gekennzeichnet durch die folgenden Schritte:
   a) Vermischen von Filterstäuben und/oder Reaktionsprodukten mit Calciumoxid und/oder Magnesiumoxid und ggf. weiteren Zuschlagsstoffen unter Wasserzusatz bei einer erhöhten Temperatur,
   b) Trocknen des unter a) erhaltenen Gemisches bei einer Temperatur von über 100°C unter gleichzeitigem Zerkleinern bzw. Entklumpen des trocknenden Produkts,

c) Erhitzen des unter b) erhaltenen zerkleinerten Trockenprodukts unter im wesentlichen nichtoxidierenden Bedingungen bei einer Temperatur von über 230°C,

d) Abkühlen des unter c) erhaltenen Produkts auf eine Temperatur von unter 70°C unter im wesentlichen nichtoxidierenden Bedingungen.

**2.** Verfahren zum Aufbereiten und Verfestigen von Filterstäuben und/oder Reaktionsprodukten, gekennzeichnet durch die folgenden Schritte:

a) Vermischen von Filterstäuben und/oder Reaktionsprodukten unter Zusatz von Branntkalk und ggf. weiteren Zuschlagstoffen mit Wasser unter Einhaltung einer Temperatur von 50°C bis 120°C,

b) Trocknen des unter a) erhaltenen Gemisches bei einer Temperatur von 120°C bis 250°C unter gleichzeitigem Zerkleinern des trocknenden Produkts,

c) Erhitzen des unter b) erhaltenen zerkleinerten Trockenprodukts unter im wesentlichen nichtoxidierenden Bedingungen auf einen Temperaturbereich von 250°C bis 350°C,

d) Abkühlen des unter c) erhaltenen Produkts auf eine Temperatur unter 80°C mit einer Abkühlgeschwindigkeit von mindestens 30°C/min.,

e) ggf. Verfestigen des unter d) erhaltenen Produkts durch Vermischen mit einem hydraulischen Bindemittel ggf. unter Zusatz einer geeigneten Silikonverbindung.

**3.** Verfahren nach Anspruch 1 oder 2, dadurch gekennzeichnet, daß die Filterstäube und/oder Reaktionsprodukte aus der erweiterten Rauchgasreinigung stammen.

**4.** Verfahren nach einem der vorhergehenden Ansprüche, dadurch gekennzeichnet, daß das Vermischen nach Schritt a) während einer Zeitdauer von mindestens 5 min., bevorzugt 10 - 15 min. und bei einer Temperatur von 40°C bis 130°C stattfindet.

**5.** Verfahren nach einem der vorhergehenden Ansprüche, dadurch gekennzeichnet, daß das Trocknen nach Schritt b) bei einer Temperatur über 100°C stattfindet und mit dem Erhitzen nach Schritt c) kombiniert ist.

**6.** Verfahren nach einem der vorhergehenden Ansprüche, dadurch gekennzeichnet, daß das Erhitzen nach Schritt c) in einem Temperaturbereich von 230°C bis 380°C stattfindet, wobei ein im wesentlichen hydratwasserfreies Produkt erhalten wird.

**7.** Verfahren nach Anspruch 1, dadurch gekennzeichnet, daß das Abkühlen nach Schritt d) mit einer Abkühlgeschwindigkeit von mindestens 10°C/min. stattfindet.

**8.** Verfahren nach Anspruch 1, dadurch gekennzeichnet, daß in einem weiteren Schritt e) das in Schritt d) erhaltene Produkt durch Vermischen mit einem hydaulischen Bindemittel verfestigt wird.

**9.** Verfahren nach Anspruch 8, dadurch gekennzeichnet, daß das Vermischen mit dem hydraulischen Bindemittel unter Zusatz einer geeigneten Silikonverbindung erfolgt.

**10.** Verfahren nach Anspruch 8, dadurch gekennzeichnet, daß die Silikonverbindung Kaliummethylsilikonat aufweist, das bevorzugt in wässriger Lösung mit einem Festgehalt von 35 - 50 Gew.-% in einem Anteil von 1 - 6 Gew.-‰ mit dem erhaltenen Produkt vermischt wird.

**11.** Verfahren nach einem der vorhergehenden Ansprüche, dadurch gekennzeichnet, daß der Mischung aus Filterstaub und/oder Reaktionsprodukten und/oder Zuschlagsstoffen in Schritt a) Branntkalt (Calciumoxid) in einem Gewichtsanteil von 10 - 60 Gew.-%, bevorzugt 10 - 30 Gew.-% zugesetzt wird.

**12.** Verfahren nach einem der vorhergehenden Ansprüche, dadurch gekennzeichnet, daß als Zuschlagsstoff in Schritt a) Rotschlamm und/oder REA-Gips und/oder Galvanikschlamm zu dem Gemisch nach Schritt a) in einem Gewichtsverhältnis von 10 : 1 bis 1 : 10, bevorzugt 3 : 10, bezogen auf die Mischung von Filterstäuben und/oder Reaktionsprodukten mit Branntkalk zugesetzt wird.

**13.** Verfahren nach einem der vorhergehenden Ansprüche, dadurch gekennzeichnet, daß man als weiteren Zuschlagstoff in Schritt a) Siliziumdioxid, vorzugsweise in Form von Kieselsäure, in einem Anteil von 0,1 - 3,0 Gew.-%, bezogen auf das trockene Gesamtgemisch, zusetzt.

14. Verfahren nach einem der vorhergehenden Ansprüche, dadurch gekennzeichnet, daß man die Mischung der Komponenten nach Schritt a) mit Wasser zu einer pastösen homogenen Masse aufschlämmt.

15. Verfahren nach einem der vorhergehenden Ansprüche, dadurch gekennzeichnet, daß das Trocknen und Zerkleinern bei dem anschließenden Durchgang des Gemisches durch die Heizeinrichtung erfolgt.

16. Verfahren nach einem der vorhergehenden Ansprüche, dadurch gekennzeichnet, daß man den bei der Trocknung nach Schritt b) gebildeten Wasserdampf kondensiert und das Kondensat ggf. unter Zusatz von Wasser zum Vermischen der Komponenten nach Schritt a) und/oder zum Verfestigen des in Schritt d) erhaltenen Produkts in Schritt e) verwendet.

17. Verfahren nach einem der vorhergehenden Ansprüche, dadurch gekennzeichnet, daß das Trocknen und Zerkleinern in Schritt b) unter im wesentlichen nichtoxidierenden Bedingungen erfolgt.

18. Verfahren nach einem der vorhergehenden Ansprüche, dadurch gekennzeichnet, daß man zur Einhaltung der nichtoxidierenden Bedingungen unter Luftausschluß, unter verminderten Druck oder unter Inertgas arbeitet.

19. Verfahren nach einem der vorhergehenden Ansprüche, dadurch gekennzeichnet, daß man kontinuierlich das Trocknen und Zerkleinern in Schritt b) sowie das Erhitzen in Schritt c) in einer Heizeinrichtung mit zwei unterschiedlichen Wärmezonen durchführt, wobei das Material transportiert, zerkleinert und der gebildete Wasserdampf abgeführt wird.

20. Verfahren nach einem der vorhergehenden Ansprüche, dadurch gekennzeichnet, daß man die Zeitdauer für das Erhitzen in Schritt c) auf mindestens 10 min., bevorzugt 15 - 90 min. einstellt.

21. Verfahren nach Anspruch 9, dadurch gekennzeichnet, daß die Silikonverbindung Kaliummethylsilikonat ist, das in einem Anteil von 0,5 - 5 kg, bevorzugt 1,5 - 2,0 kg pro m³ aufbereiteten Produkts zugesetzt wird.

22. Verfahren nach Anspruch 9, dadurch gekennzeichnet, daß die Silikonverbindung vorzugsweise ein Hydrophobisierungsmittel ist.

23. Verfahren nach einem der vorhergehenden Ansprüche, dadurch gekennzeichnet, daß man das zu verfestigende Produkt in Schritt e) zu Monolithen oder anderen Formkörpern vergießt.

24. Verfahren nach Anspruch 1), dadurch gekennzeichnet, daß man als Zuschlagsstoff in Schritt a) Wasserglas (Natriumsilikat) in Lösung in einem Anteil von 1 - 20 Gew.%, bevorzugt 1 - 10 Gew.% zusetzt.

25. Verfahren nach einem der vorhergehenden Ansprüche, dadurch gekennzeichnet, daß man als Zuschlagsstoff in Schritt a) Karbid (Calciumkarbid), bevorzugt als Granulat, in einem Anteil von 1 - 5 Gew.%, bevorzugt 2 - 3 Gew.% zusetzt.

26. Verfahren nach Anspruch 8, dadurch gekennzeichnet, daß das hydraulische Bindemittel, insbesondere Portland-Zement, in einem Anteil zum aufbereiteten Produkt von 15 bis 40 Gew.%, bevorzugt 20 bis 30 Gew.% und besonders bevorzugt 25 Gew.% beigemischt wird.

Europäisches
Patentamt

EUROPÄISCHER RECHERCHENBERICHT

Nummer der Anmeldung

EP    92 10 9411
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | DE-A-4 009 447 (J. RUDOLF ET AL)<br><br>* Zusammenfassung; Ansprüche 1-3,7-11,13-15,17 *<br>* Spalte 2, Zeile 21 - Spalte 3, Zeile 24 *<br>* Spalte 3, Zeile 38 - Spalte 4, Zeile 31 *<br>--- | 1,3-6,<br>8-9,11,<br>13-20,<br>22-23 | C04B18/10<br>B09B3/00<br>A6203/00<br>C04B28/04 |
| Y | WO-A-8 800 483 (W. KINZEBACH)<br><br>* Zusammenfassung; Ansprüche 1-3,5,9-11 *<br>* Seite 3, Zeile 24 - Seite 4, Zeile 26 *<br>* Seite 8, Zeile 17 - Seite 9, Zeile 17 *<br>* Seite 10, Zeile 28 - Seite 12, Zeile 9 *<br>* Beispiele 4,6,10,12 *<br>--- | 1,3-6,<br>8-9,11,<br>13-20,<br>22-23 | |
| Y | EP-A-0 188 718 (NUKEM GMBH)<br><br>* Zusammenfassung; Ansprüche 1-4 *<br>* Seite 1, Zeile 10 - Zeile 14 *<br>* Seite 2, Zeile 35 - Seite 4, Zeile 16 *<br>* Seite 5, Zeile 32 - Seite 6, Zeile 31 *<br>--- | 1,3-6,8,<br>11,<br>14-15,<br>19-20,<br>23,26 | RECHERCHIERTE SACHGEBIETE (Int. Cl.5)<br><br>C04B<br>B09B<br>A62D |
| Y | AUFBEREITUNGS TECHNIK.<br>Bd. 25, Nr. 1, Januar 1984, WIESBADEN DE<br>H. W. HÜNLICH:<br><br>* Zusammenfassung *<br>* Spalte 10, Zeile 60 - Spalte 12, Zeile 24 *<br>* Spalte 13, Zeile 14 - Spalte 14, Zeile 44 *<br>* Tabelle 2 *<br>---<br><br>-/-- | 1,3-6,8,<br>11,<br>14-15,<br>19-20,<br>23,26 | |

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1992 | OLSSON S.A. |

Europäisches
Patentamt

**EUROPÄISCHER RECHERCHENBERICHT**

Nummer der Anmeldung

EP   92 10 9411
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-677 230 (SIGA CONTRAKTORS S.A.)<br><br>* das ganze Dokument *<br>--- | 1,3-4,8, 11, 14-15,23 | |
| A | BE-A-885 712 (UNION DES PRODUCTEURS BELGES DE CHAUX, CALCAIRES, DOLOMITES ET PROD. CONNEXES)<br>* Seite 2, Zeile 1 - Zeile 16 *<br>* Seite 3, Zeile 5 - Seite 4, Zeile 26 *<br>* Ansprüche 1-4,7; Beispiel 1 *<br>--- | 1,3-4, 11-14,23 | |
| A | US-A-4 941 772 (W. ROESKY ET AL)<br>* Zusammenfassung; Ansprüche 1,8,12 *<br>* Spalte 1, Zeile 13 - Zeile 56 *<br>* Spalte 3, Zeile 1 - Spalte 4, Zeile 17 *<br>* Spalte 5, Zeile 33 - Spalte 6, Zeile 5 *<br><br>----- | 1,25 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1992 | OLSSON S.A. |